# EUROPEAN PATENT APPLICATION

(11) **EP 4 672 488 A1**
(43) Date of publication of application: **31.12.2025**
(21) Application number: 24865633.2
(22) Date of filing: 25.06.2024
(51) Int. Cl.: H01M 50/59, H01M 50/588, H01M 50/502, H01M 50/211, H01M 50/249, H01M 50/531, H01M 10/48

(54) **BATTERY MODULE, AND BATTERY PACK AND VEHICLE INCLUDING SAME**

(30) Priority: 12.09.2023 KR 20230121168; 04.01.2024 KR 20240001588
(71) Applicant: LG Energy Solution, Ltd., Seoul 07335 (KR)
(72) Inventor: KIM, Jae-Wook, Daejeon 34122 (KR); KIM, Gwan-Woo, Daejeon 34122 (KR); JANG, Sung-Hwan, Daejeon 34122 (KR)
(74) Representative: Plasseraud IP
(86) International application number: PCT/KR2024/008808
(87) International publication number: WO 2025/058189

(57) **Abstract**

The present disclosure relates to a battery module including: a plurality of battery cells each having an electrode lead; a bus-bar frame positioned on a side of the plurality of battery cells where the electrode leads are located, and having a lead slot through which the electrode leads of the plurality of battery cells pass and a stepped portion formed in a portion where the electrode lead passing through the lead slot is located; and at least one damage prevention member provided between the electrode lead and the stepped portion.

## Description

### TECHNICAL FIELD

The present disclosure relates to a battery module, and a battery pack and a vehicle including the same, and more specifically, it relates to a battery module including a plurality of pouch-type battery cells and having improved connection between electrode leads, and a battery pack and a vehicle including the same.

The present application claims priority to Korean Patent Application No. 10-2023-0121168 filed on September 12, 2023 in the Republic of Korea, the disclosures of which are incorporated herein by reference.

The present application claims priority to Korean Patent Application No. 10-2024-0001588 filed on January 04, 2024 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. The lithium-ion batteries generally use lithium-based oxides and carbon materials as positive and negative electrode active materials, respectively. The lithium secondary batteries include an electrode assembly in which the positive and negative electrode plates, which are coated with the positive and negative electrode active materials, respectively, are disposed with a separator therebetween, and an exterior case, i.e., a battery case, that seals and stores the electrode assembly with an electrolyte.

In general, secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

When a higher voltage is required, a battery module or battery pack may be configured by connecting a plurality of battery cells in series. In addition, a battery module or a battery pack may be configured by connecting a plurality of battery cells in parallel in order to increase the charge/discharge capacity. Accordingly, the number of battery cells included in the battery module or battery pack may be set in various ways depending on the required output voltage or charge/discharge capacity.

In a conventional battery module including a plurality of pouch-type battery cells, the electrode leads are provided to be bent after passing through lead slots of a bus-bar frame and to be stacked with each other. The plurality of stacked electrode leads are coupled by laser welding. In this case, the laser welding of the electrode leads may cause a problem in which the bus-bar frame located at the back of the electrode leads is damaged.

Therefore, it is required to develop a separate structure to improve weldability by preventing the bus-bar frame located at the back of the electrode leads from being damaged when the electrode leads are laser-welded.

In addition, the conventional battery module has a separate structure for sensing the voltage of the electrode lead in order to prevent the battery cells from being used in an environment higher than an appropriate voltage during charging and discharging. However, if such a separate component is provided, the cost and time for manufacturing respective components may increase, and the process may become complicated.

Therefore, there is a need to develop a structure in which a single component is able to prevent damage to the bus-bar frame when welding the electrode leads, as well as sensing the voltage of the electrode lead, thereby reducing cost and time.

### DISCLOSURE

### Technical Problem

The present disclosure has been designed to solve the problems of the related art, and therefore the present disclosure is directed to providing a battery module capable of preventing damage to other components when welding electrode leads of a battery cell.

In addition, the present disclosure aims to provide a battery module capable of reducing cost and time and improving productivity when manufacturing the battery module.

In addition, the present disclosure aims to provide a battery pack and a vehicle including such a battery module.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including: a plurality of battery cells each having an electrode lead; a bus-bar frame positioned on a side of the plurality of battery cells where the electrode leads are located, and having a lead slot through which the electrode leads of the plurality of battery cells pass and a stepped portion formed in a portion where the electrode lead passing through the lead slot is located; and at least one damage prevention member provided between the electrode lead and the stepped portion.

A length of the damage prevention member in a height direction may be configured to be greater than a length of the electrode lead in the height direction.

A plurality of damage prevention members may be provided, and the plurality of damage prevention members may be provided separately to be spaced apart from each other.

The stepped portion may include a first portion configured to be flat and a second portion configured to extend to be stepped inward from the first portion.

The damage prevention member may be configured in a shape corresponding to a shape of the stepped portion and may be seated on the stepped portion.

The damage prevention member may include a contact portion seated on the first portion so as to be in contact the electrode lead, and a support portion configured to extend to be stepped from the contact portion and to be spaced apart from the electrode lead.

The damage prevention member may include a connecting portion configured to connect the contact portion and the support portion.

The support portion and the contact portion may have a groove formed to be recessed inward in a portion adjacent to the connecting portion.

The damage prevention member may include a main plate configured to face the electrode lead, and a coupling plate configured to be bent from both sides of the main plate toward the bus-bar frame.

At least one hole may be formed in the coupling plate.

The damage prevention member may be formed integrally with the bus-bar frame by insert-injection molding.

Two adjacent electrode leads among the electrode leads may pass through the lead slots and bend to overlap each other, and the overlapping electrode leads may be bonded by laser welding.

The contact portion may be bonded to at least a portion of the electrode lead by laser welding, and the support portion may be configured to protect the bus-bar frame from heat caused by laser welding.

In addition, the present disclosure provides a battery pack including a battery module according to the present disclosure.

In addition, the present disclosure provides a vehicle including a battery module according to the present disclosure or a battery pack according to the present disclosure.

### Advantageous Effects

According to one aspect of the present disclosure, it is possible to prevent damage to other components during welding between electrode leads of the battery cell. In particular, according to this aspect of the present disclosure, weldability between the electrode leads may be improved.

In addition, according to another aspect of the present disclosure, it is possible to prevent damage to other components during welding between electrode leads of the battery cell and sense the voltage of the electrode lead.

In addition, according to another aspect of the present disclosure, since several components are integrally manufactured, the process of manufacturing the battery module may be simplified. As a result, cost and time may be reduced, and productivity may be improved.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery module according to an embodiment of the present disclosure.
FIG. 2 is an exploded perspective view illustrating primary components of a battery module according to an embodiment of the present disclosure.
FIG. 3 is a front view of a bus-bar frame included in a battery module according to an embodiment of the present disclosure.
FIG. 4 is a partially incisional perspective view illustrating a portion of a bus-bar frame included in a battery module according to an embodiment of the present disclosure.
FIG. 5 is an exploded perspective view of a bus-bar frame included in a battery module according to an embodiment of the present disclosure.
FIG. 6 is a perspective view of a damage prevention member included in a battery module according to an embodiment of the present disclosure.
FIG. 7 is a drawing illustrating the state in which a damage prevention member included in a battery module is coupled to a bus-bar frame according to an embodiment of the present disclosure.
FIG. 8 is a drawing illustrating welding portions of an electrode lead in a battery module according to an embodiment of the present disclosure.
FIG. 9 is a schematically perspective view of a battery pack including a battery module according to an embodiment of the present disclosure.
FIG. 10 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure includes various embodiments. Duplicate descriptions of substantially identical or similar configurations between respective embodiments will be omitted, and the description will be made based on the differences therebetween.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the left-right direction, the Y-axis direction may indicate the front-back direction perpendicular to the X-axis direction on the horizontal plane (X-Y plane), and the Z-axis direction may indicate the up-down direction (vertical direction) perpendicular to both the X-axis direction and the Y-axis direction.

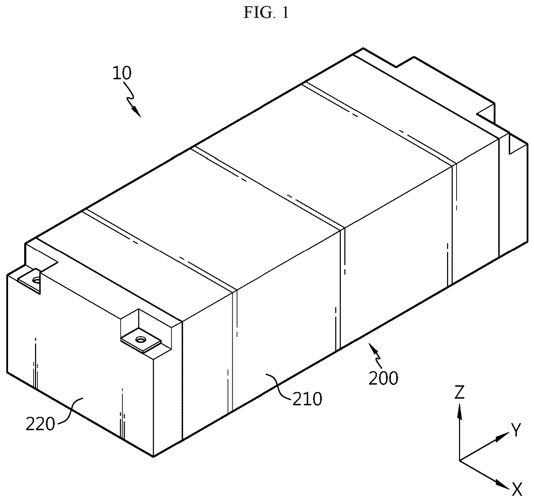

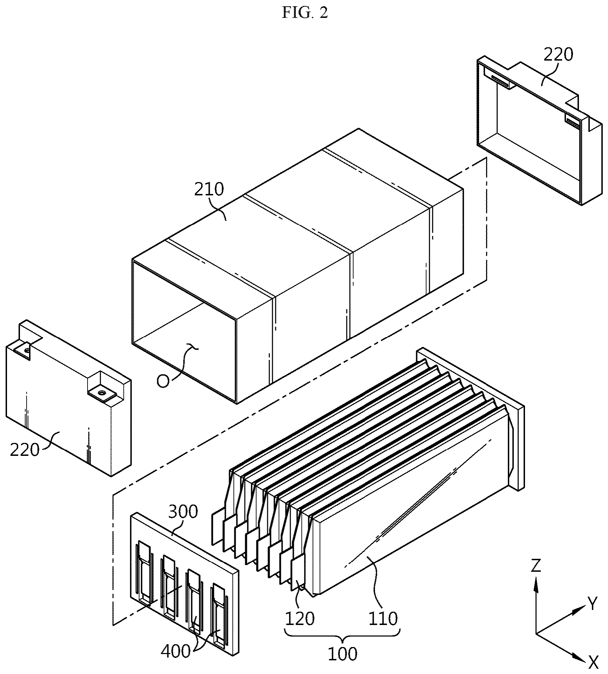

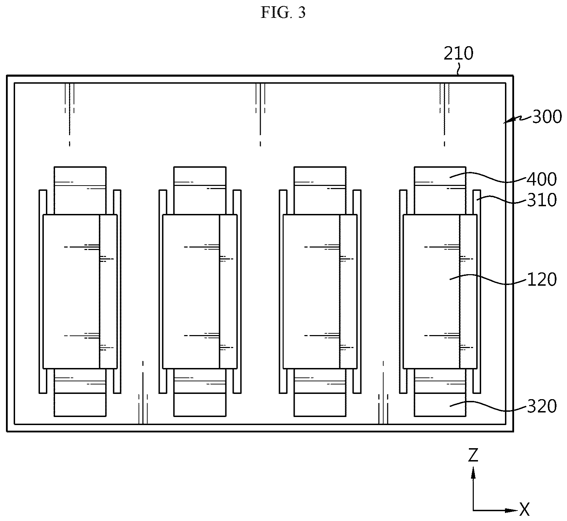

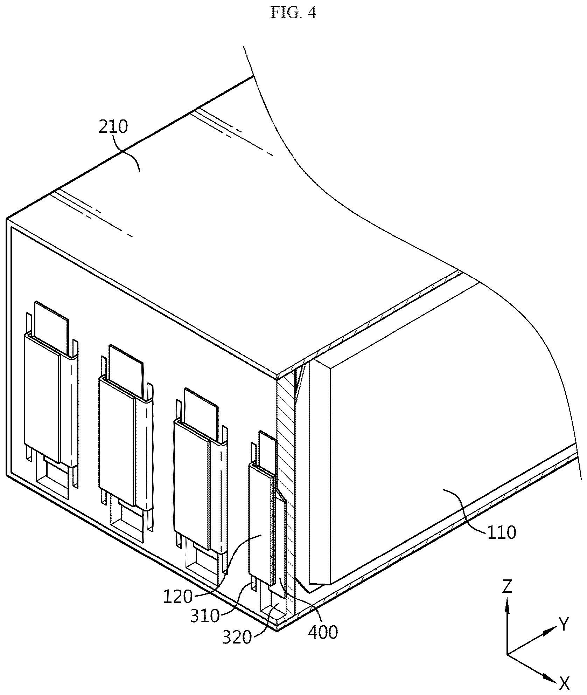

FIG. 1 is a perspective view of a battery module according to an embodiment of the present disclosure, FIG. 2 is an exploded perspective view illustrating primary components of a battery module according to an embodiment of the present disclosure, FIG. 3 is a front view of a bus-bar frame included in a battery module according to an embodiment of the present disclosure, and FIG. 4 is a partially incisional perspective view illustrating a portion of a bus-bar frame included in a battery module according to an embodiment of the present disclosure.

Referring to FIGS. 1 to 4, a battery module 10 according to an embodiment of the present disclosure includes a battery cell 100, a bus-bar frame 300, and a damage prevention member 400.

Referring to FIGS. 2 and 3, a plurality of battery cells 100 may be provided. The plurality of battery cells 100 may be, for example, pouch-type secondary batteries. Each of the plurality of battery cells 100 may have an electrode lead 120.

Specifically, the plurality of battery cells 100 may include an electrode assembly, a cell case 110 that accommodates the electrode assembly, and an electrode lead 120 that is connected to the electrode assembly and extends outside the cell case 110 to function as an electrode terminal. The cell case 110 may accommodate the electrode assembly in a storage space, and the edges around the storage space may be heat-fused to form a sealing portion.

A pair of electrode leads 120 may be provided, and the pair of electrode leads 120 may extend from both ends of the battery cell 100, that is, in the longitudinal direction (±Y-axis direction). In this case, the pair of electrode leads 120 may be a positive electrode lead and a negative electrode lead. The battery cell 100 may be configured such that two electrode leads 120 are located only at one end in the Y-axis direction, for example, at the end in the +Y-axis direction as necessary.

As illustrated in FIG. 2, the plurality of battery cells 100 may be arranged side by side in the left-right direction (X-axis direction) while standing in the vertical direction (Z-axis direction). In this case, each battery cell 100 may be disposed such that a sealing portion is directed in the front-back direction (Y-axis direction) and the up-down direction (Z-axis direction), and such that the storage space is directed in the left-right direction (X-axis direction).

Meanwhile, the battery module 10 according to an embodiment of the present disclosure may further include a blocking member (not shown). The blocking member may be provided between the battery cells 100. In particular, a plurality of blocking members may be included. The blocking members may be disposed between every one or more battery cells 100. According to the above-implemented configuration of the present disclosure, the battery cells 100 may be partitioned or separated to prevent gas or flame from spreading to other blocking members adjacent to the blocking member.

The blocking member may be made of a material having excellent heat resistance and/or fire resistance, such as silicone or aerogel. According to the above-implemented configuration of the present disclosure, the blocking member may contribute to the structural rigidity of the battery cells 100 by compressing the battery cells 100 in the case of swelling of the battery cells 100.

Meanwhile, referring to FIGS. 1 and 2, the battery module 10 according to an embodiment of the present disclosure may include a module case 200. The module case 200 may be configured to have an inner space O formed therein and accommodate battery cells 100 in the inner space O. The module case 200 according to the present embodiment may include a case body 210 and an end plate 220.

The case body 210 may be provided as a mono frame. The case body 210 may be configured as a square tube having an upper surface, a lower surface, a left surface, and a right surface and having front and rear openings. In addition, the upper surface, lower surface, left surface, and right surface may be configured in an integrated form. The case body 210 may be made of a metal material having rigidity and heat resistance in order to physically or chemically protect the stored battery cells 100.

In addition, the case body 210 may be formed in various other shapes. For example, the case body 210 may be configured such that the left plate, the right plate, and the lower plate are integrated with each other. In this case, the integrated case member may be referred to as a U-frame. The U-frame may be configured in a tubular shape by welding a top plate to the top thereof.

In this case, the case body 210 may be configured to enable the battery cells 100 to be inserted thereinto in one direction. For example, the battery cells 100 may be inserted into the inside of the case body in the front-back direction (Y-axis direction). That is, the case body 210 may be configured such that the battery cells 100 are able to be inserted thereinto by sliding or press-fitting. For the coupling of press fitting, it may be configured such that there is almost no gap between the upper and lower surfaces of the case body 210 and the top and bottom of the battery cells 100, and such that there is almost no gap between both side surfaces of the case body 210 and both sides of the battery cells 100.

Meanwhile, although not shown in the drawing, a venting hole may be provided in the case body 210, enabling directional venting in one direction. For example, a plurality of venting holes may be formed on the lower surface of the case body 210, and directional venting of the battery module 10 to the bottom may be possible through the venting holes.

The end plates 220 may be provided on the front and rear openings of the case body 210. The end plate 220 may be coupled to the case body 210 by welding. Meanwhile, although not shown for convenience, the end plate 220 may be formed of an insulating material on the inner side and a metal material on the outer side. In addition, the end plate 220 may be partially provided with holes or slits for exposing components that need to be exposed to the outside, such as a positive electrode terminal, a negative electrode terminal, or a connector of the battery module 10.

Meanwhile, referring to FIG. 2, the bus-bar frame 300 may be provided inside the module case 200 to cover at least one side of the battery cells 100. In the present embodiment, as shown in FIG. 2, the bus-bar frame 300 may be provided in a plate shape so as to cover both ends of the battery cells 100 and the front side (in the -Y-axis direction) or the rear side (in the +Y-axis direction) of the battery cells 100. This bus-bar frame 300 may be formed of an electrically insulating material such as plastic or the like, and may be produced by injection molding.

Referring to FIG. 3, the bus-bar frame 300 may include a lead slot 310. The lead slot 310 may be provided so that some of the electrode leads 120 of the plurality of battery cells 100 may pass therethrough. The lead slot 310 may be configured so that a plurality of electrode leads 120 may pass therethrough in the front-back direction (+Y-axis or -Y-axis direction). To this end, the lead slot 310 may be located on the side of the plurality of battery cells 100 where the electrode leads 120 are provided, and a plurality of lead slots 310 may be provided so as to be spaced apart from each other in the stacking direction (X-axis direction) of the battery cells 100.

In this case, the plurality of electrode leads 120 passing through the lead slots 310 may be bent and stacked on each other. Such a stacking structure may enable the plurality of battery cells 100 having the electrode leads 120 in contact with each other to be electrically connected to each other.

In addition, referring to FIG. 3 and FIG. 4, the bus-bar frame 300 may include a stepped portion 320. The stepped portion 320 may be obtained by a portion of the bus-bar frame 300 being recessed inward (in the back direction or the +Y-axis direction) to form a step. A plurality of stepped portions 320 may be provided at the respective positions where the electrode leads 120 pass through the lead slots 310. The stepped portion 320 may be formed corresponding to a portion where the electrode lead 120 passing through the lead slot 310 is provided. As a result, a space may be formed between the stepped portion 320 and the electrode lead 120.

The battery module 10 according to an embodiment of the present disclosure may further include a damage prevention member 400. At least one damage prevention member 400 may be provided. The damage prevention member 400 may be provided between the electrode lead 120 and the stepped portion 320 of the bus-bar frame 300. That is, the electrode lead 120 may be provided to be spaced apart from at least a portion of the damage prevention member 400.

Therefore, since a space is formed between the electrode lead 120 and the damage prevention member 400, heat generated by welding the electrode leads 120 may be prevented from being transferred to the bus-bar frame 300. Therefore, according to the above-described implemented configuration of the present disclosure, damage to the bus-bar frame 300 may be prevented when welding the electrode leads 120 of the battery cells 100. In particular, according to this aspect of the present disclosure, the weldability between the electrode leads 120 may be improved.

Conventionally, a separate structure was required to prevent damage to the bus-bar frame located at the back of the electrode leads during laser welding between the electrode leads, thereby improving weldability. However, the present disclosure may improve the weldability by utilizing the stepped portion 320 of the bus-bar frame 300 without a separate structure. Furthermore, the damage prevention member 400 may prevent damage to the bus-bar frame 300 due to welding.

In addition, the damage prevention member 400 may be made of a metal material. In this case, at least a portion of the damage prevention member 400 may be configured to be in contact with the electrode lead 120. At least a portion of the damage prevention member 400 may be coupled to the electrode lead 120 by laser welding.

Accordingly, the damage prevention member 400 may be configured to prevent damage to the bus-bar frame 300 during welding between the electrode leads 120 and to sense the voltage of the electrode lead 120. Although not shown in the drawing, the battery module 10 according to an embodiment of the present disclosure may be provided with a voltage sensing unit, and a voltage measuring unit may be connected to the damage prevention member 400, thereby sensing the voltage of the electrode lead 120.

According to the above-described implemented configuration of the present disclosure, even if a component for sensing the voltage of the electrode lead 120 is not separately provided, the damage prevention member 400 may sense the voltage of the electrode lead 120, enabling a single element to have multiple functions, thereby simplifying the process for manufacturing the battery module. As a result, in manufacturing the battery module 10, since multiple components are manufactured in an integrated form, material costs and element preparation or assembly time may be reduced, and productivity may be improved.

More specifically, referring to FIGS. 3 and 4, the length of the damage prevention member 400 in the height direction (Z-axis direction) may be configured to be greater than the length of the electrode lead 120 in the height direction (Z-axis direction). That is, the damage prevention member 400 and the stacked electrode leads 120 may be provided to overlap in the front-back direction, and may be provided to completely overlap in the height direction as well. Therefore, regardless of which part of the electrode lead 120 is welded, the damage prevention member 400 positioned on the back of the same may prevent the bus-bar frame 300 from being damaged due to welding.

Referring to FIG. 3, a plurality of damage prevention members 400 may be provided. In this case, the plurality of damage prevention members 400 may be provided separately from each other. That is, the damage prevention member 400 may be provided at each position where the stacked electrode leads 120 are located. According to the above-implemented configuration of the present disclosure, voltages of the stacked electrode leads 120 may be independently sensed so that a BMS (Battery Management System) may manage voltage information of the respective battery cells 100, thereby further securing the safety of the battery module 10. Meanwhile, although not shown in the drawing, the plurality of damage prevention members 400 may respectively sense the voltages of stacked electrode leads 120 and transmit information thereof to one unit.

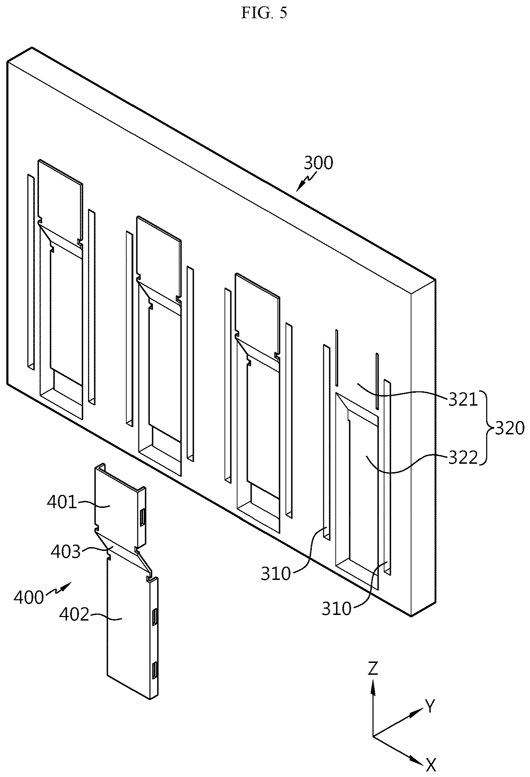

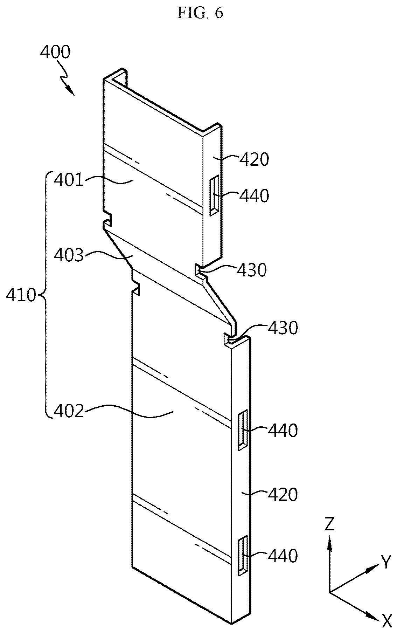

FIG. 5 is an exploded perspective view of a bus-bar frame included in a battery module according to an embodiment of the present disclosure, and FIG. 6 is a perspective view of a damage prevention member included in a battery module according to an embodiment of the present disclosure.

Referring to FIG. 5, the stepped portion 320 may include a first portion 321 configured to be flat and a second portion 322 extending to be recessed inward from the first portion 321. Although the step between the first portion 321 and the second portion 322 is formed to be inclined, it may also be formed at a right angle. The first portion 321 may be provided to protrude outward from the second portion 322 (from the inside of the battery module 10 to the outside). Accordingly, the second portion 322 may be configured to be spaced completely apart from the stacked electrode leads 120.

Meanwhile, the damage prevention member 400 may be configured in a shape corresponding to the shape of the stepped portion 320 and may be seated on the stepped portion 320. That is, the damage prevention member 400 may be configured to completely cover the stepped portion 320. According to the above-implemented configuration of the present disclosure, the damage prevention member 400 may prevent the bus-bar frame 300 from being damaged by heat caused due to welding of the electrode leads 120.

The damage prevention member 400 may be configured in a plate shape with a step. Specifically, referring to FIGS. 5 and 6, the damage prevention member 400 may include a contact portion 401 and a support portion 402. The contact portion 401 may be provided to be seated on the first portion 321 of the stepped portion 320 so as to come into contact with the electrode lead 120. The support portion 402 may be configured to extend to have a step from the contact portion 401. In this case, the height, angle, and shape of the step between the contact portion 401 and the support portion 402 may be configured to correspond to those of the step between the first portion 321 and the second portion 322. Therefore, the support portion 402 may be provided to be spaced apart from at least a portion of the electrode lead 120. In addition, the damage prevention member 400 may include a connecting portion 403 provided to connect the contact portion 401 and the support portion 402. The connecting portion 403 may be configured to correspond to the shape of the stepped portion 320, that is, it may be configured to be inclined or perpendicular to the contact portion 401 and the support portion 402, respectively.

In this case, the contact portion 401, the support portion 402, and the connecting portion 403 may be configured in a plate shape each having a predetermined area and configured to be connected to each other. As a result, the damage prevention member 400 may be provided in full contact with the stepped portion 320 so as to cover a predetermined area of the stepped portion 320. According to the above-implemented configuration of the present disclosure, the second portion 322 may be protected more stably and reliably when welding the electrode leads 120.

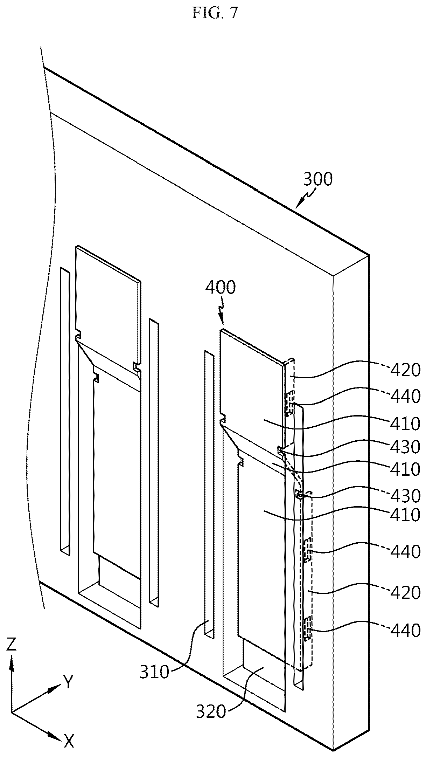

FIG. 7 is a drawing illustrating the state in which a damage prevention member included in a battery module is coupled to a bus-bar frame according to an embodiment of the present disclosure.

Referring to FIG. 7, the damage prevention member 400 may be manufactured separately and then coupled to the bus-bar frame 300. For example, the damage prevention member 400 may be separately assembled to the bus-bar frame 300. Alternatively, the damage prevention member 400 may be formed integrally with the bus-bar frame 300 by insert-injection molding. That is, when manufacturing the bus-bar frame 300, a premanufactured damage prevention member 400 may be inserted into the mold of the bus-bar frame 300, and a thermoplastic resin may be melted and injected into the mold, and then cooled, thereby producing the damage prevention member 400 and the bus-bar frame 300 integrally.

According to the above-implemented configuration by insert-injection molding of the present disclosure, the process of separately assembling the damage prevention member 400 to the bus-bar frame 300 is omitted, so that supplementary materials may be reduced, and cost and time may be reduced, thereby improving productivity. In addition, the injection molded bonding between the bus-bar frame 300 and the damage prevention member 400 may ensure rigidity, so that stability may be improved.

A groove 430 may be formed in the damage prevention member 400. Specifically, the groove 430 may be formed by the support portion 402 and the contact portion 401 being indented inward. The groove 430 may be formed in a portion adjacent to the connecting portion 403. According to the above-described implemented configuration of the present disclosure, during the insert-injection molding of the damage prevention member 400, a thermoplastic resin for forming the bus-bar frame 300 may penetrate into the groove 430, thereby fixing the damage prevention member 400 on both sides thereof. Therefore, bonding force may be secured between the damage prevention member 400 and the bus-bar frame 300, thereby improving stability.

Meanwhile, referring to FIGS. 6 and 7, the damage prevention member 400 may include a main plate 410 and a coupling plate 420. The main plate 410 may be configured to face the electrode leads 120. The main plate 410 may be configured in a shape corresponding to the stepped portion 330. The main plate 410 may be configured such that at least a portion thereof is in contact with the electrode lead 120. The main plate 410 may include a contact portion 401, a support portion 402, and a connecting portion 403. That is, the main plate 410 may be configured in a plate shape that is elongated in the height direction and has a step.

The coupling plate 420 may be configured to be bent from both sides of the main plate 410 toward the bus-bar frame 300, that is, to the inside. In the case where the damage prevention member 400 is formed integrally with the bus-bar frame 300 by insert-injection molding, as shown in FIG. 7, the coupling plate 420 may be inserted into the bus-bar frame 300.

In this case, at least one hole 440 may be formed in the coupling plate 420. When the damage prevention member 400 is formed integrally with the bus-bar frame 300 by insert-injection molding, the hole 440 may facilitate injection of the thermoplastic resin into the mold. In addition, when the thermoplastic resin filled in the hole 440 hardens, the bonding area between the damage prevention member 400 and the bus-bar frame 300 may further increase, thereby reducing the risk of the damage prevention member 400 accidentally being detached from the bus-bar frame 300 by external force. The positions and number of the holes 440 may be different from the illustrated example.

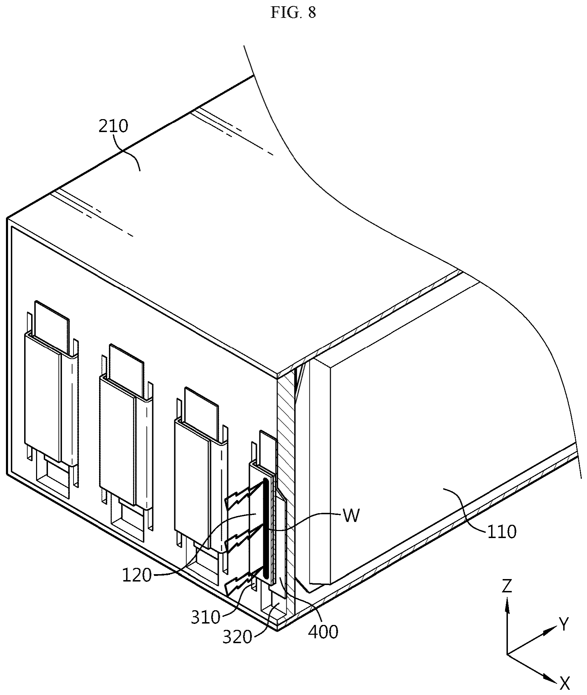

FIG. 8 is a drawing illustrating welding portions of an electrode lead in a battery module according to an embodiment of the present disclosure.

As described above, a plurality of electrode leads 120 may be respectively provided in the plurality of battery cells 100, and at least some of the plurality of electrode leads 120 may pass through the lead slots 310 and may then be bent and stacked on each other. Therefore, at least some of the electrode leads 120 may be provided on the outer surface of the bus-bar frame 300.

In this case, two adjacent electrode leads 120 among the electrode leads 120 may pass through the lead slots 310 and bend to overlap each other, and the overlapping electrode leads 120 may be bonded by welding. The electrode leads 120 may be bonded by, for example, spot welding or line welding. That is, welding portions W may be formed on the outer surface of the electrode leads 120. For example, as illustrated in FIG. 8, the welding portions W may be formed along the height direction (Z-axis direction) of the electrode lead 120.

In this case, the contact portion 401 is bonded to at least a portion of the electrode lead 120 by laser welding. In addition, the support portion 402 may be configured to be spaced apart from the remaining portion of the electrode lead 120 to protect the bus-bar frame 300 from heat caused by laser welding.

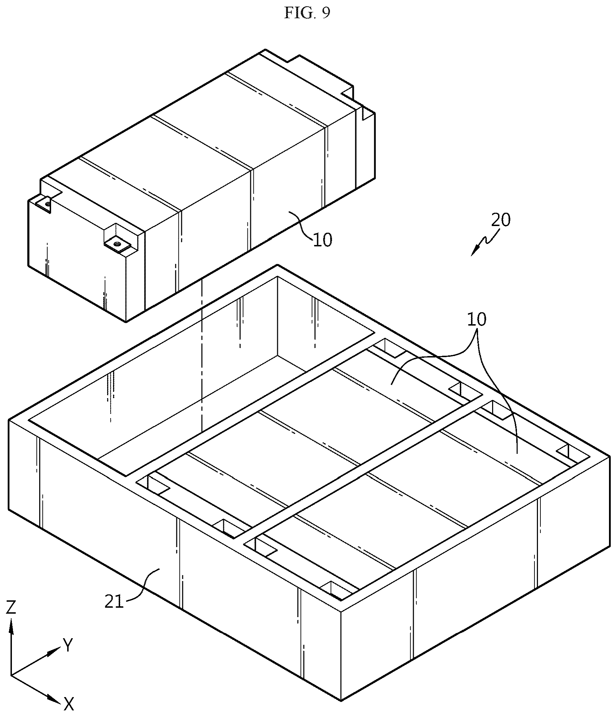

FIG. 9 is a schematically perspective view of a battery pack including a battery module according to an embodiment of the present disclosure.

Referring to FIG. 9, the battery pack 20 according to an embodiment of the present disclosure may include one or more battery modules 10 according to an embodiment of the present disclosure described above. The battery pack 20 according to the present disclosure may further include a pack case 21 for accommodating the components described above, such as a BMS for integrated control of charging and discharging of one or more battery modules, a current sensor, a fuse, or the like.

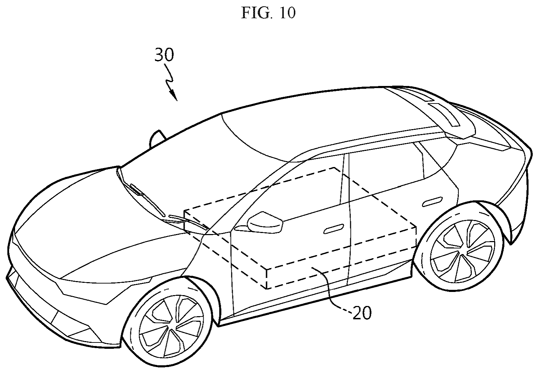

FIG. 10 is a schematically perspective view of a vehicle including a battery pack according to an embodiment of the present disclosure.

Referring to FIG. 10, a vehicle 30 according to an embodiment of the present disclosure may include one or more battery packs 20 according to an embodiment of the present disclosure or battery modules 10 according to an embodiment of the present disclosure. The vehicle 30 according to the present disclosure may be, for example, an electric vehicle, a hybrid vehicle, or a plug-in hybrid vehicle. The vehicle 30 includes a four-wheel vehicle and a two-wheel vehicle. The vehicle 30 drives by receiving power from the battery pack 20 or the battery module 10 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a plurality of battery cells each having an electrode lead;
a bus-bar frame positioned on a side of the plurality of battery cells where the electrode leads are located, and having a lead slot through which the electrode leads of the plurality of battery cells pass and a stepped portion formed in a portion where the electrode lead passing through the lead slot is located; and
at least one damage prevention member provided between the electrode lead and the stepped portion.

2. The battery module according to claim 1,
wherein a length of the damage prevention member in a height direction is configured to be greater than a length of the electrode lead in the height direction.

3. The battery module according to claim 1,
wherein a plurality of damage prevention members are provided, and
wherein the plurality of damage prevention members are provided separately to be spaced apart from each other.

4. The battery module according to claim 1,
wherein the stepped portion comprises
a first portion configured to be flat, and
a second portion configured to extend to be stepped inward from the first portion.

5. The battery module according to claim 4,
wherein the damage prevention member is configured in a shape corresponding to a shape of the stepped portion and is seated on the stepped portion.

6. The battery module according to claim 5,
wherein the damage prevention member comprises
a contact portion seated on the first portion so as to be in contact the electrode lead, and
a support portion configured to extend to be stepped from the contact portion and to be spaced apart from the electrode lead.

7. The battery module according to claim 6,
wherein the damage prevention member comprises
a connecting portion configured to connect the contact portion and the support portion.

8. The battery module according to claim 7,
wherein the support portion and the contact portion have a groove formed to be recessed inward in a portion adjacent to the connecting portion.

9. The battery module according to claim 1,
wherein the damage prevention member comprises
a main plate configured to face the electrode lead, and
a coupling plate configured to be bent from both sides of the main plate toward the bus-bar frame.

10. The battery module according to claim 9,
wherein at least one hole is formed in the coupling plate.

11. The battery module according to claim 1,
wherein the damage prevention member is formed integrally with the bus-bar frame by insert-injection molding.

12. The battery module according to claim 1,
wherein two adjacent electrode leads among the electrode leads pass through the lead slots and bend to overlap each other, and
the overlapping electrode leads are bonded by laser welding.

13. The battery module according to claim 6,
wherein the contact portion is bonded to at least a portion of the electrode lead by laser welding, and
wherein the support portion is configured to protect the bus-bar frame from heat caused by laser welding.

14. The battery module according to claim 1,
wherein the damage prevention member is configured to sense voltage of the electrode lead.

15. A battery pack comprising a battery module according to any one of claims 1 to 14.

16. A vehicle comprising a battery pack according to claim 15.
